# EUROPEAN PATENT APPLICATION

(11) **EP 2 453 347 A2**
(43) Date of publication of application: **16.05.2012**
(21) Application number: 11008898.6
(22) Date of filing: 08.11.2011
(51) Int. Cl.: G06F 3/06

(54) **Method for sending data in optical disc drive capable of changing mode**

(30) Priority: 10.11.2010 KR 20100111459; 10.11.2010 KR 20100111460
(71) Applicant: Hitachi-LG Data Storage Korea, Inc., Geumcheon-gu Seoul 153-803 (KR)
(72) Inventor: Oh, Daekeun, Seoul, 153-803 (KR)
(74) Representative: Katérle, Axel

(57) **Abstract**

The present invention provides a method for sending data in an optical disc drive capable of changing mode. In one embodiment of the present invention, if a read command is received from a host connected, whether an address included in the command indicates a file system area of a predetermined file system can be checked; and if the address included in the command is found to belong to the file system area, data converted according to the predetermined file system from file information about files recorded in an optical disc can be sent to the host.

## Description

### CROSS-REFERENCE TO RELATED APPLICATION

This application claims priority to Korean Patent Applications No. 10-2010-0111459 and 10-2010-0111460 filed on November 10, 2010, the contents of which are herein incorporated by reference in its entirety.

### BACKGROUND

### 1. Technical Field

The present invention relates to a method for sending data in an optical disc drive capable of changing its mode. More specifically, the present invention relates to an optical disc drive which can be used for a device equipped with an USB input other than PC.

### 2. Discussion of the Related Art

Optical discs such as CD (Compact Disc), DVD (Digital Versatile Disc), and BD (Blu-ray Disc) are easy to carry; capable of being loaded and unloaded; and capable of recording and storing a large amount of data. Thanks to these features, optical disc drives capable of playing or recording optical discs are widely used for peripheral devices of desktop computers or laptop computers.

Nowadays, as desktop computers are getting slimmer and thickness of laptop computers smaller, external optical disc drives are getting more popular rather than built-in optical disc drives; in this case, a single external optical disc drive can be shared among several computers as a common peripheral device.

An external optical disc drive can be connected to a computer through USB interface for sending and receiving data.

To extend the range of choice for video or audio sources, TVs or various types of AV devices of today provide a function of retrieving and playing data stored in a flash memory device such as a SD card and a memory stick or an external hard disc through USB interface.

A conventional external optical disc drive is equipped with USB interface for connecting to an external device; however, the USB interface of the conventional external optical disc drive is mostly intended for connection to a computer excluding the use for other devices.

### SUMMARY

The present invention has been made to solve the problem described above. One objective of the present invention is to provide an optical disc drive which can be used for devices equipped with USB input.

Another objective of the present invention is to provide a method for switching operating modes of an optical disc drive so that the optical disc drive can be connected to a device with USB input.

Yet another objective of the present invention is to provide a method for changing a file system of an optical disc in order for an USB device connected to an optical disc drive to access data stored in the optical disc.

Still another objective of the present invention is to provide a method for reading out and sending data of an optical disc in order for a USB device connected to an optical disc drive to play the contents stored in the optical disc continuously.

To achieve the objective described above, a method for sending data in an optical disc drive according to one embodiment of the present invention comprises: if a read command is received from a host connected, checking whether an address included in the command indicates a file system area of a predetermined file system; and if the address included in the command is found to belong to the file system area, sending to the host data converted according to the predetermined file system from file information about files recorded in an optical disc.

In one embodiment, before receiving the command, the file information about files recorded in the optical disc is converted according to the predetermined file system and thus stored in a memory; if the address included in the command indicates an address at which file information is recorded in the file system area, the converted file information stored in the memory can be sent.

In one embodiment, the converted file information may include a number of files included in the disc; and a file name, a file size, a start address of data, property, and time information of each file. At this time, when the file information about files recorded in the optical disc is converted according to the predetermined file system, the start address of data can be changed to an address which is obtained by adding a start address of the corresponding file recorded in the optical disc at least by a size of the file system area.

In one embodiment, the converted file information can be arranged in terms of a start address of each file data and the arranged file information can be additionally stored; at this time, only the start address and the file size of the data from the file information can be stored.

In one embodiment, if the address included in the command indicates in the file system area an address at which an address table is recorded, the address table containing addresses at which file data are recorded, a file corresponding to a table indicated by the address included in the command may be searched for based on the arranged file information; an address table of data of the searched file may be generated and the generated address table may be sent to the host.

In one embodiment, if the address included in the command is found not to belong to the file system area, data corresponding to the address included in the command can be read out from the optical disc and sent to the host; at this time, data can be read out from an address which is obtained by subtracting from the address included in the command a size of the file system area.

In one embodiment, if errors occur more than a predetermined number of times for the same data while data are read out from the optical disc, dummy data can be generated and sent to the host.

In one embodiment, the optical disc records data according to IS01996 or UDF file system specifications and the predetermined file system can be FAT32.

An optical disc drive according to another embodiment of the present invention comprises: a loader for reading data from an optical disc or recording data in the optical disc; an interface to be connected to a host; and a controller, if a read command is received from the host through the interface, configured to check whether an address included in the command indicates a file system area of a predetermined file system and, if the address included in the command belongs to the file system area, to send to the host through the interface data converted according to the predetermined file system from file information about files recorded in the optical disc.

Accordingly, when an optical disc drive is connected to a device equipped with USB inputs rather than PC, operating mode can be changed automatically.

Also, the optical disc drive can be used for devices with USB inputs as well as PC.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 illustrates structure of an optical disc drive to which the present invention is applied;
FIG. 2 is a flow diagram illustrating a method for changing operation mode of an optical disc drive to USB mode according to one embodiment of the present invention;
FIG. 3 illustrates an embodiment where two interfaces are provided for changing operation mode of an optical disc drive;
FIG. 4 is a flow diagram illustrating a procedure of transforming a file system of an optical disc while an optical disc drive switches to USB mode according to one embodiment of the present invention;
FIG. 5 is a flow diagram illustrating a method for sorting file information in terms of start address of each file;
FIG. 6 is a flow diagram illustrating a method for sending a file system converted according to FAT32 format and data recorded in an optical disc to a connected USB host according to one embodiment of the present invention; and
FIG. 7 compares a method according to the present invention with that of prior art regarding a method for dealing with read-out errors occurred when data are read out from an optical disc and sent.

### DESCRIPTION OF THE EMBODIMENTS

In the following, embodiments of a method for sending data in an optical disc drive capable of changing mode according to the present invention will be described in detail with reference to appended drawings.

An optical disc drive, which has been used primarily for a peripheral device of computer, is connected through E-IDE (Enhanced-Integrated Drive Electronics) or SATA (Serial Advanced Technology Attachment) interface when implemented for built-in operation, whereas the optical disc drive is connected to a computer as an external device through USB or SCSI (Small Computer System Interface) protocol.

Meanwhile, data are recorded in an optical disc according to ISO9660 or UDF (Universal Disk Format) file system, which are different from the file system supported by computer OS (Operating System). Due to this reason, OS does not directly access a disc but some program (e.g., Nero) executed in the OS accesses the disc and record or read out data on or from the disc. In other words, file format change of a disc is carried out by a connected computer rather than an optical disc drive.

Accordingly, a conventional external optical disc drive, in the case of sending data recorded in a disc to a host computer connected through USB or SCSI, transforms data in the form of ISO9660 or UDF file system into data of USB or SCSI format and sends the converted data to the host. In the case of receiving data from the host, data converted according to ISO9660 or UDF specifications by the host (some program operated by the OS of the host computer) are received in the form of USB or SCSI formatted data capsules.

On the other hand, ordinary A/V devices with USB inputs other than computers equipped with OS or programs executed in the OS employ FAT32 file system and do not provide a function of transforming a file system of data; accordingly, even if an A/V device is connected to an external optical disc drive through USB, the A/V device cannot access the data recorded in an optical disc according to a different file system.

An optical disc drive according to the present invention provides two operating modes to allow access to data recorded in a disc for USB devices with USB input as well as computer: ODD mode of connecting to computer (or a device providing similar functionalities) and USB mode of connecting to a USB device (USB host) only for playing data of USB medium connected through a simple connection. The optical disc drive determines whether a connected device is a computer or a USB host, thereby determining whether to change operation modes. If the optical disc drive changes to the USB mode, the optical disc drive, to allow the connected USB host to access data recorded in a disc, transforms the file system of data recorded in the disc into the corresponding file system used in the USB host and send the converted data to the connected USB host.

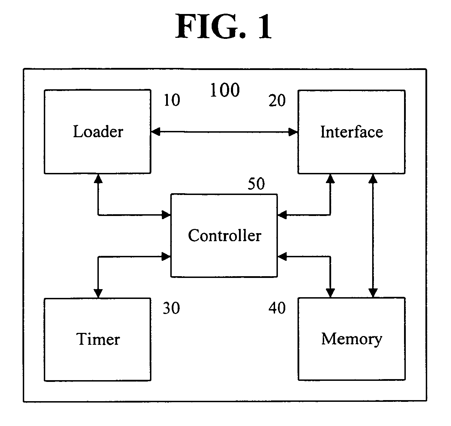

FIG. 1 illustrates structure of an optical disc drive to which the present invention is applied.

An optical disc drive 100 according to the present invention comprises a loader 10 for driving an optical pick-up, a spindle motor, a sled motor, and so on for recording or reading out data on or from an optical disc; an interface 20 for connecting to an external device, a memory 30 for storing data temporarily, a timer 40; and a controller 50 for controlling each element, determining operation mode, changing operation mode, and transforming a file system.

First, a method for changing operation mode of an optical disc drive will be described.

For an optical disc drive to be used for a computer or an USB host other than the computer, operation mode should be changed to ODD mode or USB mode.

A first method for changing operation mode, at the time of connecting an optical disc drive to a computer or an USB host other than the computer, distinguishes a command coming from a computer or an USB host and automatically changes the operation mode into USB mode.

Once the optical disc drive is connected to a computer through USB interface, it receives commands of "Get Event/Status Notification", "Get Configuration", and "Mode Sense 2A page" from the connected computer. Therefore, based on the reception of the corresponding command, a connected device can be determined as a computer or an ordinary USB host.

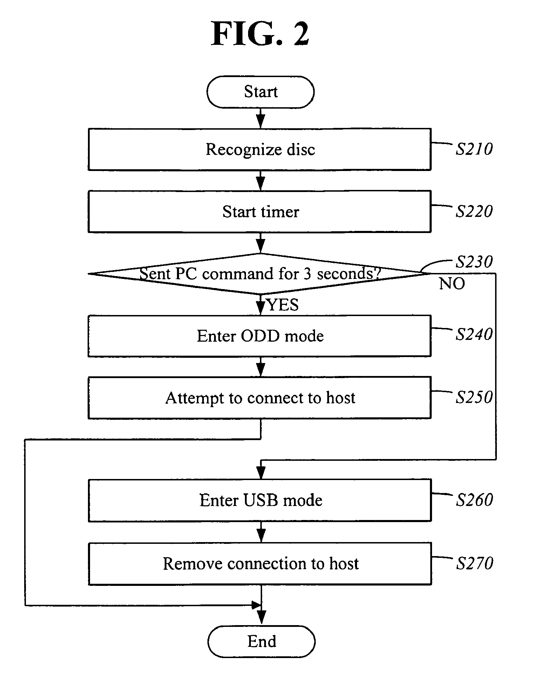

FIG. 2 is a flow diagram of an embodiment for switching to USB mode automatically.

If power is supplied to an optical disc drive, the controller 80 recognizes an inserted disc by controlling the loader 10 (S210). If the interface 20, for example USB interface is newly connected to an external device in a state where power has been supplied to the optical disc drive, the S210 step can be omitted.

The controller 50 starts a time countdown by controlling the timer 40 (S220) and checks, for a predetermined time of period, for example three seconds, whether computer commands of "Get Event/Status Notification", "Get Configuration", and "Mode Sense 2A page" are received through the interface 20 (S230). Here, the S220 and S230 step can be carried out together in parallel with the S210 step.

If one of "Get Event/Status Notification", "Get Configuration", and "Mode Sense 2A page" command is received within three seconds (YES at S230 step), the controller 50 enters ODD mode by switching device type into ODD (S240). Then the controller 50 attempts to connect to an external device S250 by controlling the interface 20 (S250).

On the other hand, unless a command is received within three seconds (NO at S230 step), the controller 50 enters USB mode by switching the device type into USB (S260). Then the controller 50 disconnects connection to an external device by controlling the interface 20 (S270), which is intended for changing a file system afterwards.

A second method for changing operation mode is to change into USB mode when a particular button prepared outside the optical disc drive is pressed. The particular button is connected to a GIO (Global Input Output) terminal of the controller 50; if the particular button is pressed, the GIO terminal becomes HIGH (or LOW) and the controller 50 can recognize a request for mode change. The controller 50, if the GIO terminal is HIGH (or LOW), enters USB mode by switching the device type into USB. Then the controller 50 removes connection to an external device for a moment by controlling the interface 20.

A third method for changing operation mode is to change into USB mode when a particular button of the optical disc drive, for example eject button is operated according to a particular pattern. The particular pattern can correspond to the case of pressing the eject button two or more times successively within a predetermined time or the case of pressing the eject button continuously for another predetermined time. The controller 50 takes the ODD mode as a default operation mode; however, if the controller 50 detects that the eject button is operated according to a particular pattern, the controller 50 enters USB mode by switching the device type into USB. Then the controller 50 removes connection to an external device for a moment by controlling the interface 20.

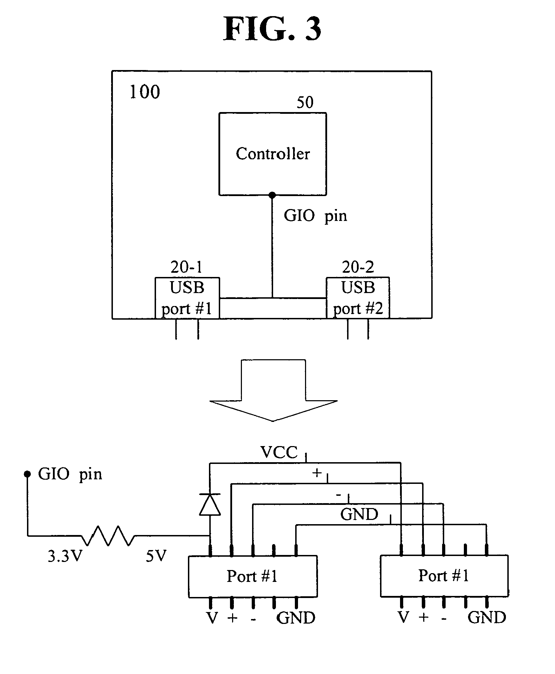

A fourth method for changing operation mode is, as shown in FIG. 3, to prepare two interfaces 20 and use one of them as a port for ODD mode (port #1) and the other one as a port for USB mode (port #2). The port #1 and #2 are connected to GIO terminals of the controller 50; if an external device is connected to the port #2 of the interface 20, the corresponding GIO terminal of the controller 50 becomes HIGH (or LOW). The controller 50 detects the change and enters USB mode by switching the device type into USB. Then the controller 50 removes connection to an external device for a moment by controlling the interface 20. Meanwhile, if the controller 50 detects that the GIO terminal becomes LOW (or HIGH), the controller 50 enters ODD mode by switching the device type into ODD. Then the controller 50 attempts connection to an external device by controlling the interface 20.

Meanwhile, an optical disc drive records data on an optical disc by using a file system of ISO9660 or UDF, while an ordinary USB host records into or play data from a hard disk, flash memory, and the like by using FAT32 file system.

Therefore, when the optical disc drive switches its device type into USB mode while being connected to an USB host with USB input other than a computer, it is required to change the file system of an optical disc so that the connected USB host can control the data recorded in the optical disc.

The optical disc drive, when switching its device type into USB mode, converts the file system of an optical disc according to FAT32 specifications. The optical disc drive then delivers the converted file system to a connected USB host, after which the USB host can access the files recorded in the optical disc and play the files.

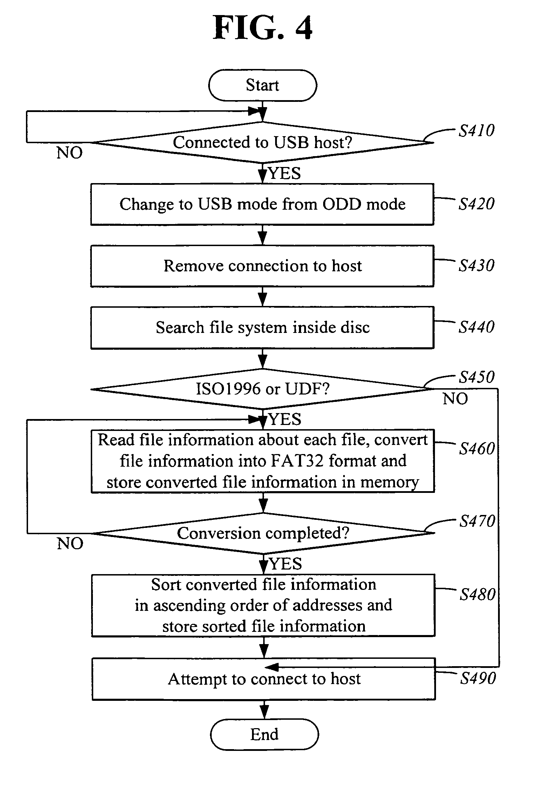

FIG. 4 is a flow diagram illustrating a procedure of transforming a file system of an optical disc while an optical disc drive connected to an ordinary USB host switches to USB mode.

The controller 50, if it is connected to an USB host S410 with USB inputs other than a computer, switches its operation mode from ODD mode (which is a default mode) to USB mode S420, removes S430 connection to the USB host by controlling the interface 20, and searches the file system of an optical disc S440 by controlling the loader 10.

The controller 50, if the file system of an optical disc is ISO9660 or UDF (YES in S450 step), converts the file system for the respective files included in the disc according to FAR32 format; the controller 50 reads file information of each file recorded in the disc by controlling the loader 10 and converts the read file information according to FAT32 and stores the converted file information in the memory 30 such as DRAM S460. The controller 50 repeats the above process until the file system conversion is completed for all of the files included in the disc S470.

The controller 50 generates file system information according to FAT32 format, the file system information comprising the number of files stored in an optical disc; and, for respective files, a file name, length of the file name, start address of data, file size (or length), property (to show whether it is a file or a folder), and time information. The controller 50 then stores the generated file system information in the memory 30. The start address of each file is calculated as a value moved backward to secure more than the space to be occupied by the file system information for the files (and FAT table) , namely as the sum of the original start address recorded in the optical disc and the size of the file system information (or size of a file system area in which the file system information is recorded). When data are actually read out form the optical disc, data are read out from the required address subtracted by the amount of file system information.

Afterwards, the controller 50 stores the file information converted according to FAT32 file system specifications in the memory 30; in addition, the controller 50 stores partial information (start address, file size, etc.) of each file information by sorting the partial information in the order of start address S480. The controller 50 then attempts to connect to the USB host S490.

The optical disc drive, after sending file information converted to a file system of FAT32 format to the USB host, should generate FAT table (which is a table arranging all the addresses in terms of a predetermined length (four bytes), at which data of a predetermined size (e.g., sector) included in the corresponding file are recorded) data upon a request of the USB host and send the FAT table data to the USB host. In a FAT32 file system, the address at which the FAT table of each file is recorded is determined by the start position and the size of each file. When the USB host requests FAT table data of a file, the USB host sends a command requesting reading the address at which the FAT table data of interest are recorded based on the start position and size of the file.

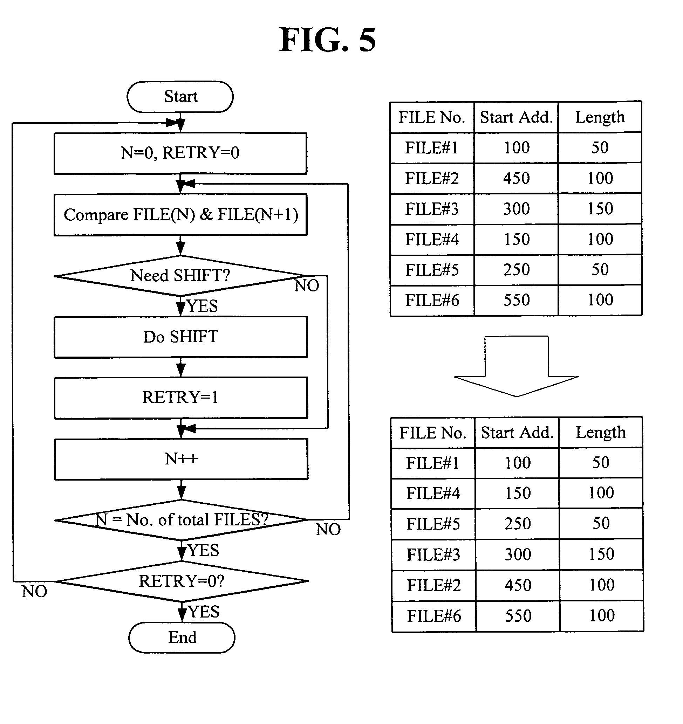

Therefore, to facilitate a search for a file corresponding to the FAT table indicated by the address included in the command sent by the USB host, it is advantageous for the optical disc drive to sort individual file information converted through S450 to S470 step in the order of start address. FIG. 5 introduces a method for sorting file information according to start address of each file; from the file information arranged in the order of file names, start addresses of two neighboring files are compared in a sequential order. The file information is then stored in the ascending order.

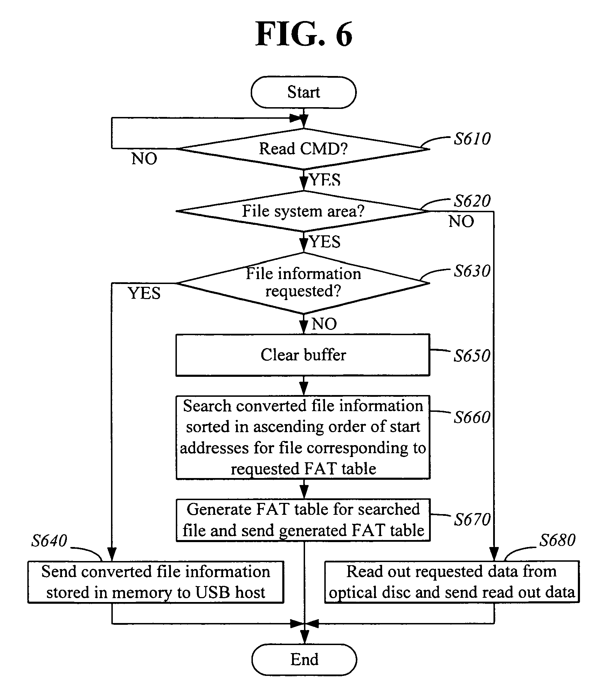

Next, a method for sending file systems and data recorded in an optical disc converted according to FAT 32 format in the USB mode to an USB host will be described; FIG. 6 illustrates a flow diagram of the method.

When an USB host attempts access to an USB device such as USB HDD or USB memory for the first time, to check data stored in the corresponding medium, the USB host sends a command requesting file system information about all the files recorded in the USB medium. At this time, the corresponding command is a read command destined for an area in which file system information according to FAT32 specifications is stored; in response to the command, returned is file system information comprising the number of data files stored in the corresponding medium; and a file name, length of the file name, file size, start address, property, and time of each file.

Also, when the USB host accesses a required file after directories, files, and information of each directory or file included in the USB medium are checked, a command requesting sending a FAT table arranging addresses of all the sectors included in the required file. Accordingly, if the FAT table is sent, a command requesting data transfer starting from a required address with reference to the table is sent. Afterwards, data transferred according to the above command are played. FAT table of each file is recorded in a file system area separately from a data storage area; from file information about all the files included in the corresponding medium, namely from start address and size of each file, the address at which FAT table of the corresponding file is recorded can be calculated.

If the optical disc drive is connected to an USB host after a file system about data recorded in an optical disc is converted into FAT32 format allowing access from the USB host, the controller 50 checks S610 whether a read command (Read CMD) for reading data of a disc inserted to an optical disc drive of USB mode is sent through the interface 20 from the USB host.

The controller 50, if Read CMD is received (YES at S610 step), checks destination address of the Read CMD sent by the USB host and determines S620 whether the destination address falls in a predetermined file system area in the FAT32 specifications, namely, the file system area in which FAT table and file information summarizing files recorded in a disc are recorded.

If an address included in the Read CMD sent by the USB host indicates an address, among the file system area, where file information is recorded (YES at S630 step), the controller 50 sends S640 file information already converted according to FAT32 format and stored in the memory 30 through the interface 20 to the USB host.

On the other hand, if an address included in the Read CMD sent by the USB host indicates an address, among the file system area, where FAT table is recorded (NO at S630 step)---namely, the USB host already obtained file information about data recorded in an optical disc and based on the file information, requests transfer of FAT table data of a required file---the controller 50 clears S650 a buffer (memory 30 or a buffer prepared inside the controller 50) to which data to be sent to the connected USB host are stored temporarily. The controller 50 then searches for file information S660 corresponding to the FAT table indicated by the address included in the Read CMD by looking up file information arranged in the order of start address at S480 step. The controller 50 generates FAT table about the corresponding file based on the start address and size information of the corresponding file and sends the generated FAT table through the interface 20 to the USB host S670. S660 and S670 steps will be described in detail afterwards.

And, unless a destination address of Read CMD send by the USB host falls in an area to which the file system is recorded (NO at S620 step) ---namely, the USB host already obtained file information about data recorded in an optical disc and FAT table data about a required file and based on the file information and the FAT table data, requests transfer of data of the corresponding file---the controller 50 reads out data at the address requested for transfer from the optical disc and sends S680 the data to the USB host. More specifically, the controller 50 reads out data from the requested address subtracted by the size (or size of the file system area) of file system information (including each file information and FAT table of each file) and sends the data to the USB host. Next, errors occurring while data are read out from an optical disc will be described in detail.

S660 and S670 step are now described.

A data recording medium according to FAT32 file system sequentially forms a file system area where MBR (Master Boot Record), a boot sector, a FAT table, and directory/file information are recorded; and a data area where actual file data are recorded.

Since size of a FAT table grows according to the amount of data recorded in the medium (the number of sectors recorded in the data area), every FAT table about the corresponding file cannot be converted and stored in the memory 30 during conversion of the file system of the optical disc; therefore, every time the USB host makes a request, a FAT table corresponding to a requested file has to be newly generated.

In the FAT table area, FAT tables for the respective files are generated and recorded in the ascending order of addresses. For example, as shown in FIG. 5, if start address of File#1 is 100 and the number of sectors corresponding to the file size is 50 (100, 50); File#2 (450, 100); File#3 (300, 150); File#4 (150, 100); File#5 (250, 50); and File#6 (550, 100), a FAT table of 200 bytes (= 50 sectors x 4 bytes/sector) is recorded from a predetermined address (A) within a FAT table area for File#1, start address of which comes first among them. For File#4 which comes second among them, a FAT table of 400 bytes (= 100 sectors x 4 bytes/sector) is recorded; for File#5, a FAT table of 200 bytes (= 50 x 4); for File #3, a FAT table of 600 bytes (= 150 x 4); for File #2, a FAT table of 400 bytes (= 100 x 4); and for File #6, a FAT table of 400 bytes (= 100 x 4).

The USB host which received directory/file information makes a request for a FAT table about the corresponding file to access a required file; the USB host, based on the file information (start address and size of each file), calculates address at which the FAT table for the corresponding file is recorded and sends a Read CMD including the calculated address. In the previous example, when the USB host requests a FAT table of File#3, the USB host sends a Read CMD having the address at which the FAT table of File#3 is recorded and the size of the FAT table as parameters; the address at which the FAT table of File #3 is recorded can be calculated by the sum of the FAT table size of files preceding the start address of data of File #3 (200 (File #1) + 400 (File#4) + 200 (File#5)) and the start address (A) at which the first FAT table is recorded.

The optical disc drive, receiving a Read CMD requesting transfer of FAT table data, has to check whether the corresponding command falls into a file system area from the address included in the corresponding command; the optical disc drive also has to determine whether the area indicated by the address is intended for recording file information or a FAT table. If the area indicated by the address is found to correspond to a FAT table, it has to be further checked for which file the address corresponds to the FAT table.

If file information of a file system converted according to FAT32 format is stored in the memory 30, the controller 50 reads start address and size information of all the files from a first file; based on the read information, calculates address at which FAT table data of each file is recorded; and by comparing the calculated address with the address included in the Read CMD, has to search for a file corresponding to a FAT table required by the USB host.

However, if file information (start address, file size) of each file is arranged in terms of start address when the file system of an optical disc is stored in the memory 30 after being converted to the file information of FAT32 format, since the controller 50, based on the file information (file size) stored in the memory 30, can calculate address for recording FAT table of the corresponding file in the ascending order of start addresses of the respective files sequentially from the first file the start address of which is earliest; therefore, by comparing calculated address with that included in the Read CMD, the controller 50 can quickly find a file corresponding to the FAT table indicated by the address included in the Read CMD. In other words, as shown in FIG. 5, if file information is arranged in the order of start addresses, a file corresponding to a FAT table requested by an USB host can be found quickly.

If a file corresponding to a FAT table requested by the USB host has been found, based on the start address and file size information of the corresponding file, the controller 50 newly generates FAT table data and sends the data to the USB host through the interface 20.

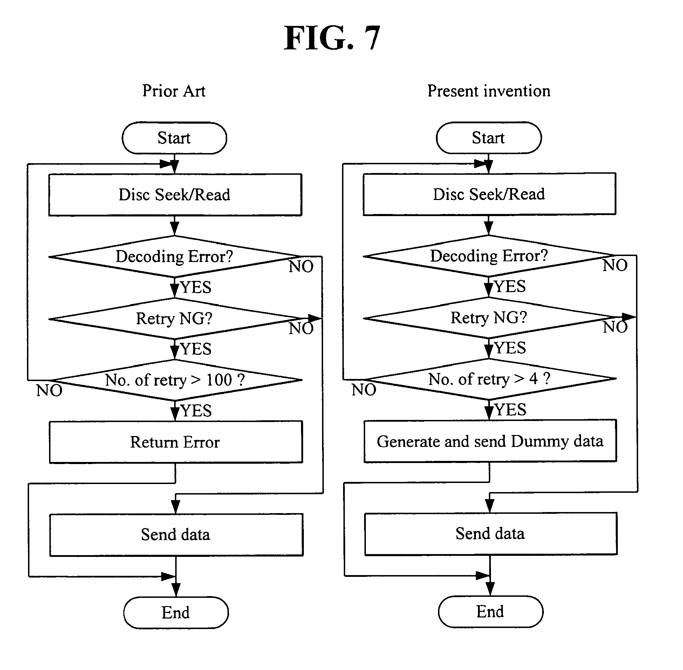

Next, a method for reading out and sending data requested by an USB host will be described. FIG. 7 compares a method according to the present invention with that of prior art regarding a method for dealing with read-out errors occurred when data are read out from an optical disc and sent.

An optical disc drive reads out data at the address requested by the USB host from an optical disc and sends the data to the USB host. In the prior art, if decoding of signals read out from the disc fails due to defect of the optical disc or degradation of read signals, decoding is retried and subsequently, time delay is generated from the retry; since an error is reported when an upper bound for the number of retry is exceeded from a predetermined repetition of retry, the USB host stops playing the corresponding contents.

USB hosts other than a computer include MP3 player, PMP, TV, and AV player; an USB host receives music, video, pictures, and text stored in a storage medium through USB and plays the received contents. In particular, in the case of playing contents such as video or music, playing the contents continuously without stopping in the presence of error for some data would be more preferable in terms of user convenience.

Therefore, at the time of reading out, for example video contents and sending the contents to an USB host in the USB mode, if an optical disc drive according to the present invention fails to decode signals read out from an optical disc more than predetermined times (for example, four times), the optical disc drive can generate dummy data and send them to the USB host. The USB host, if data are transferred normally after the dummy data, can play the contents data continuously except for a minor problem of generating small mosaic noise during play of video contents.

The preferred embodiments of the present invention described above have been introduced for the illustration purpose only; therefore, it should be understood by those skilled in the art that various other forms of embodiments allowing modification, change, substitution, or addition would be possible without leaving the technical principles and scope of the present invention defined by the appended claims.

## Claims

1. A method for sending data in an optical disc drive, comprising:
if a read command is received from a host connected, checking whether an address included in the command indicates a file system area of a predetermined file system; and
if the address included in the command is found to belong to the file system area, sending to the host data converted according to the predetermined file system from file information about files recorded in an optical disc.

2. The method of claim 1, further comprising converting the file information about files recorded in the optical disc according to the predetermined file system and storing the converted file information in a memory before receiving the command,
wherein, if the address included in the command indicates an address at which file information is recorded in the file system area, the converted file information stored in the memory is sent.

3. The method of claim 2, wherein the converted file information includes a number of files included in the disc; and a file name, a file size, a start address of data, property, and time information of each file.

4. The method of claim 3, wherein, when the file information about files recorded in the optical disc is converted according to the predetermined file system, the start address of data is changed to an address which is obtained by adding a start address of the corresponding file recorded in the optical disc at least by a size of the file system area.

5. The method of any one of claims 2 to 4, wherein the storing step further comprises arranging the converted file information in terms of a start address of each file data and additionally storing the arranged file information.

6. The method of claim 5, wherein, when arranging in terms of the start address, only the start address and the file size of data from the file information are stored.

7. The method of claim 5 or 6, wherein, if the address included in the command indicates in the file system area an address at which an address table is recorded, the address table containing addresses at which file data are recorded, the sending step includes searching for a file corresponding to a table indicated by the address included in the command based on the arranged file information; generating an address table of data of the searched file and sending the generated address table to the host.

8. The method of any one preceding claim, if the address included in the command is found not to belong to the file system area, reading out data corresponding to the address included in the command and sending the data to the host.

9. The method of claim 8, wherein, when reading out data from the optical disc, data are read out from an address which is obtained by subtracting from the address included in the command a size of the file system area.

10. The method of claim 8 or 9, wherein, if errors occur more than a predetermined number of times for the same data while data are read out from the optical disc, dummy data are generated and sent to the host.

11. The method of any one preceding claim, wherein the optical disc is adapted to record data according to ISO1996 or UDF file system specifications, and the predetermined file system is FAT32.

12. An optical disc drive, comprising:
a loader for reading data from an optical disc or recording data in the optical disc;
an interface to be connected to a host; and
a controller, if a read command is received from the host through the interface, configured to check whether an address included in the command indicates a file system area of a predetermined file system and, if the address included in the command belongs to the file system area, to send to the host through the interface data converted according to the predetermined file system from file information about files recorded in the optical disc.

13. The optical disc drive of claim 12, further comprising a memory for storing file information converted according to the predetermined file system,
wherein the converted file information includes a number of files included in the disc; and a file name, a file size, a start address of data, property, and time information of each file.

14. The optical disc drive of claim 13, wherein the controller arranges only the start address of data and the file size from among the converted file information in terms of the start address of each file data and stores additionally the arranged file information in the memory.

15. The optical disc drive of any one of claims 12 to 14, wherein, if the address included in the command is found not to belong to the file system area, the controller reads out data corresponding to the address included in the command by controlling the loader and sending the read out data to the host by controlling the interface.
